# EUROPEAN PATENT APPLICATION

(11) **EP 0 572 968 A2**
(43) Date of publication of application: **08.12.1993**
(21) Application number: 93108774.6
(22) Date of filing: 01.06.1993
(51) Int. Cl.: G01N 30/12, G01N 1/28, G01N 30/46

(54) **Method and device for the preparation of liquid samples for analysis**

(30) Priority: 05.06.1992 IT MI921398
(71) Applicant: FISONS INSTRUMENTS S.p.A., I-20090 Rodano (Milan) (IT)
(72) Inventor: Grob, Konrad, CH-8320 Firhraltorf (CH); Munari, Fausto, I-20100 Milan (IT)
(74) Representative: Marietti, Giuseppe

(57) **Abstract**

A method for the preparation of liquid samples for analysis involves the feeding of a sample to be reconcentrated into a container-evaporator provided with means for controlling the temperature and internal pressure and containing one or more support materials, the evaporation of the solvent to reconcentrate the sample to the required volume, and sending the reconcentrated sample to an analysis apparatus.

## Description

The present invention concerns a method and a device to prepare liquid samples for subsequent analysis.

In some cases, before or during analysis, it is necessary to reduce the volume of a liquid sample by evaporating all or part of the solvent before passing the sample on to a later analysis.

This happens for instance when it is necessary to substitute the solvent of a fraction coming off a LC column with another solvent, compatible with a later analysis or with a reaction producing a derivative of the sample.

A device which requires such solvent substitution is, for instance, that which performs SEC-LC-GC (Size Exclusion Chromatography - Liquid Chromatography - Gas Chromatography). In this case, the fraction coming off the SEC column has a larger volume and a mobile phase (solvent) much more polar than that required for the next separation on the LC column.

The volume of a fraction coming off the LC column or of the liquid sample itself may need to be reduced to increase the concentration of components to a level sufficient for subsequent detection.

During such reconcentration of the sample loss of sample target components, and volatile components in particular, must be reduced to a minimum.

The known techniques used to do this are unsatisfactory. The reconcentration of samples by use of rotary evaporators or gas stream evaporators leads to considerable loss of components with even quite high relative boiling points, such as, for instance, alkanes up to n - pentadecane or dimethylnaphthalene, in a sample with pentane as solvent (see K.Grob and E.Müller, J. Chromatography 404 (1987) 297).

The object of the present invention is to solve the above mentioned problems by means of a method and a device which enable the preparation of liquid samples for subsequent analysis by selective evaporation of the solvent with minimum losses of target components.

This object is achieved by means of the present invention which relates a method for the preparation of liquid samples for analysis, characterized in that it comprises the following steps:
placing upstream of a first analysis apparatus and linked in a controlled way to the same, a container having means for controlling the temperature and internal pressure and containing one or more support materials;
regulating said temperature and pressure controlling means to values corresponding to those for evaporation of the solvent present in said sample;
feeding the liquid sample to said container, evaporating the solvent and reconcentrating the sample to the required volume; and
sending the reconcentrated sample to said first analysis apparatus.

The invention further relates to a device for the preparation of liquid samples for subsequent analysis, characterized in that it comprises:
a container provided with one or more support materials forming a packing;
means for the regulation of the temperature and internal pressure of said container; and
a controlled means for connecting said container with at least one analysis apparatus downstream of said container. A further object of the invention is an apparatus for analysis of liquid samples, characterized in that it comprised a device of the above described type, which can be on-line connected with one or more downstream placed analysis apparatuses, as well as means for controllably connecting said device with said one or more apparatuses.

According to a preferred embodiment of the method of the invention, the sample coming from a first analysis apparatus or sampling system is directly fed to the evaporating container and once the sample has been reconcentrated, it is taken up with a small quantity of solvent and directly transferred from the evaporating container to an analysis apparatus (e.g. a GC apparatus) on-line connected with the evaporator container itself.

According to another aspect of the invention, the device can operate as a reactor for obtaining derivatives of components of the reconcentrated sample. To achieve this object, the original solvent is evaporated in whole or in part, and the components are taken up with a further solvent containing reagents to produce the derivatives.

According to another preferred embodiment of the invention, the feeding rate to the container, the pressure and temperature of the container can be controlled, in case by using a vacuum source, to maintain in the liquid state a part of the sample introduced in said container and evaporate the solvent from the packing zone wetted by the sample.

The analysis apparatuses which can be connected on-line to the evaporator container according to the invention and downstream of it, may be of any type suited to the analysis of liquid samples, i.e. gas chromatography, liquid chromatography, FIA (flow injection analysis), or other analysis apparatuses.

The invention will now be described in more detail with reference to the enclosed drawings which are illustrative but not limiting and in which :
- Figs. 1 and 1a are schematic partially sectional views of a device according to the invention.
- Fig.2 is a schematic diagram of a chromatographic apparatus according to the present invention.
- Fig.3 is graph of the performance of a device according to the invention.
- Fig.4 is a schematic sectional view of a device according to the present invention in operation.
- Figs. 5 and 6 are graphs relating to the operation of the device according to the invention.

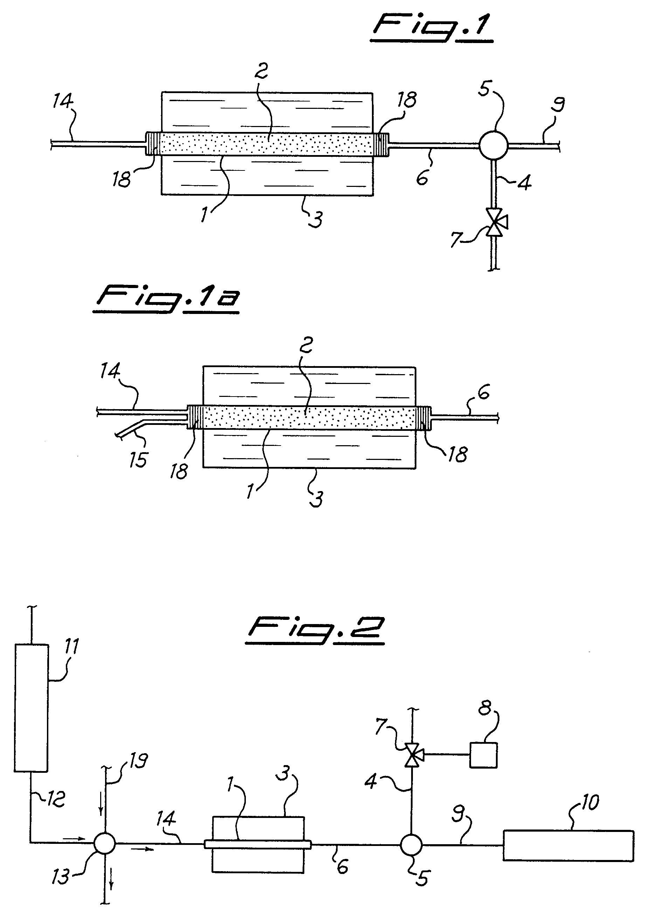

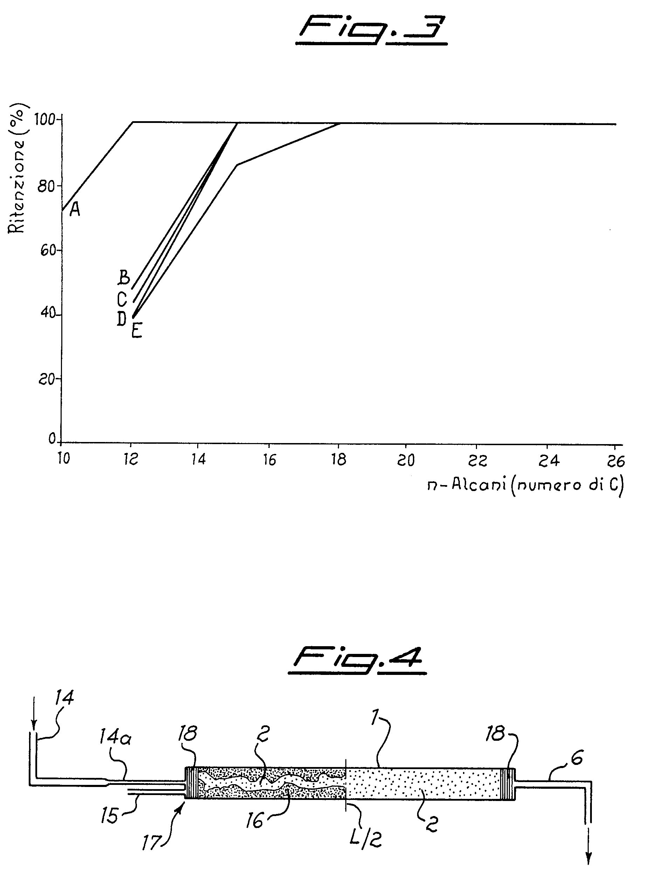

With reference to Fig.1 the device according to the invention consists of a tubular container 1 inside which there is a support material or packing 2, a sample feed pipe 14 and an outlet pipe 6, both attached in a known fluid-tight manner known to the evaporator-container 1. Two glass-fibre 'plugs' 18 keep the packing 2 in position. There is an inert gas inlet 15 in fig.1a. The inlet 14 is provided with restriction 14a, as shown in fig.4, which creates a sufficient pressure drop to prevent the sample just loaded from returning to pipe 14.

The material 2 (which may be a mixture of different materials) must be able to retain the liquid sample in the reconcentration step while allowing the solvent vapours to be delivered. Moreover, the material 2 preferably exercises a physical retaining effect on the liquid in container 1, thus preventing it from being expelled under the pushing action of the solvent vapours. Other advantageous features of material 2 are the capacity to quickly and easily reabsorb the reconcentrated sample in a small quantity of solvent as to avoid a delayed or extended evaporation of the solvent in the sample to be reconcentrated.

The main object of the support material 2, i.e. the packing, is to create the conditions to have an easy solvent evaporation by means of its physical and chemical characteristics. The size of the particles is such as to offer an extended surface area as interface between liquid and vapour phases and to prevent too sharp a pressure drop in the container 1; in any case, the pressure drop in container 1 must not be too sharp, i.e. the dimensions must not be so small as to obstruct the passage of the vapours through the packing.

The surface of the particles 2 is irregular and presents a large number of small and widely distributed pores, into which the liquid sample fed into the container deposits itself. The irregularities act as generators of vapour bubbles and the large number of small pores, particularly the shallow ones, containing the liquid sample, provide the necessary vapour-liquid interface and facilitate the subsequent removal by solvent of the reconcentrated sample.

Another important property of the support material 2 is the facility in removing the reconcentrated sample. To achieve this, apart from the above mentioned physical characteristics of the particle surface,it is important that the material not have centres of strong absorption which would retain the components of the sample in the presence of the redissolving solvent. The material 2 consists preferably of chromatographic support media (for GC or LC) such as silica gel, Tenax or Chromosorb, or of particles of an inert material, such as glass, with the above mentioned characteristics.

External to the container 1 there is a temperature regulation means 3, preferably consisting of a block of metal with good heat conducting properties (thermoregulated) or a water or oil bath fitted in a known manner with resistors and control thermostats.

The evaporator 1 is also fitted with a means for controlling its internal pressure.

These means are preferably in the form of a pipe 4 connected to the container 1 by means of a valve 5 and a pipe 6. The pipe 4 may be open directly to the external environment or connected through a valve 7 to the environment or to a vacuum pump 8 (Fig. 2) or other low pressure source.

The valve 7 may have an electrovalve or a rotary valve.

A further outlet pipe 9 from the valve 5 connects the evaporator 1 to an analysis apparatus 10 (Fig. 2) downstream of it. Such apparatus may be of the liquid chromatography (LC) or gas chromatography (GC) type, FIA, mass spectrometer, etc.

As previously stated, a preferred use of the device according to the invention is in on-line linking (Fig.2) of two analysis apparatus units, 10 and 11, when it is necessary to reconcentrate a liquid sample coming off from apparatus 11 before putting it on apparatus 10. The apparatus 11 in this case is preferably a liquid chromatography (LC) device.

In this layout, there is a primary separation in the apparatus 11. When the fraction of interest (the sample to be reconcentrated) elutes off, the outlet pipe 12 from 11 is connected, through the valve 13, to the inlet pipe 14 of the evaporator 1.

In the meantime the container-evaporator 1 has in the meantime been brought to the correct operating pressure and temperature conditions for the total or partial evaporation of the solvent in the sample to be reconcentrated. In this way the solvent of the sample coming into the container 1 is evaporated and taken off by outlet pipe 4, while the components of the sample are held by the support material 2.

The evaporation of the solvent can be facilitated by the simultaneous streaming of an inert gas through the pipe 15.

At the end of the evaporation, the valves 13 and 5 are set to connect the evaporator 1 to the analysis apparatus 10 on one side, and to feed a second solvent, in order to dissolve the concentrated sample, into evaporator 1 by means of the inlet pipe 19 and valve 13.

The second solvent is generally, but not necessarily, different from that evaporated, and dissolves the concentrated sample held on support material 2 so to send it directly to apparatus 10 for final analysis, the valve 5 being set to connect pipe 6 to inlet pipe 9 of the apparatus 10. It has been found that for an evaporator with 50 microlitres of packing, 30 microlitres of solvent are sufficient to take up all the components of interest.

Further solvent is added to the evaporator-container 1 via inlet pipe 14 to transport the sample components redissolved in the solvent up to the analysis apparathus 10. This "transport" solvent can be the same or different from that used to take up the concentrated sample. During this phase, the pressure and temperature conditions in the container are such as to prevent the evaporation of the recovery and/or the transport solvent.

Here it is to be pointed out that, as it has been already stated, the sample to be reconcentrated can be also loaded directly to the container 1 without being previously treated by the analysis apparatus 11.

The solvent inside the container 1 evaporates in a slightly different way depending on the pressure, temperature and rate of feeding the sample, and the presence or absence of an inert gas.

In substance the following mechanisms are possible:
1 - substantially simultaneous evaporation of the solvent on entry to the container. This situation develops if the pressure and temperature conditions in the container are such as to produce a rapid evaporation of the solvent in the packing zone where the sample is loaded. In this case the packing zone wetted by the solvent is extremely reduced or substantially absent. The solvent vapours pass across the container towards the outlet because of the drop in pressure and could be facilitated by the passage of inert gas fed from the inlet pipe 15. This technique is adopted preferably when there are no volatile components of interest in the sample.
2 - presence of the liquid sample in the packing zone 2, which is thus "wetted" by the solvent, and evaporation of the solvent in the absence of inert gas.

In this technique the temperature and pressure conditions are regulated to prevent the sample from vapourizing in the feed zone and create a zone wetted by the liquid sample inside the packing. The evaporation of solvent is presumed to follow the following mechanism.

Initially the solvent tends to evaporate on the front of the wetted area, causing a fall in temperature in such position and as a result a substantial reduction or interruption of the evaporation process on the wetted zone front and a consequent reduction of the pressure in this zone.

The evaporation process continues, however, in the interior of the wetted zone where bubbles of solvent vapours are formed and where there is an increase in pressure with the formation of channels through which the vapours flow up to the not wetted packing portion. The pressure (and temperature) are higher in the initial part of the packing than in the end part, creating the preconditions for the transport of the vapours through the channels.

The evaporation process inside the wetted zone stabilizes and settles into a stationary regime after some seconds.

In these stationary conditions evaporation takes place in the mass of the wetted zone and there is a transport of the vapours along one or more of the channels through the entire wetted zone, with a solvent effect which permits a substantial retention in the liquid of the volatile elements of the sample. If the operating conditions are selected correctly, the flow of vapour exiting counterbalances the flow of liquid entering and the extent of then wetted zone remains substantially constant. The situation changes at the end of the feed/evaporation process, when the flow of vapour finishes.

3 - the presence of packing "wetted" with liquid sample and evaporation of the solvent by a stream of inert gas. In this case a gas stream with reduced flow rate is used, with the only function to activate the evaporation, without representing in itself a means of evaporation. The gas facilitates reaching and maintaining the stationary state, activating the evaporation and in particular facilitating the transport of the vapours through the channels. An inert gas such as helium or nitrogen is preferably used, but other gaseous fluids suited to this purpose may be used. This technique also gives good retention of the volatile elements and a situation analogous to that illustrated in Fig.4, obviously with inlet 15 connected to the evaporator. The inert gas may be fed to the evaporator 1 for the entire process, or just for the time necessary to initiate the solvent evaporation process and the formation of vapour "channels".

Independent of the technique used, it has been found that as far as the solvent evaporation is concerned, no differences were found in the retention of components in the sample as a function of the solvent feed rate solvent to the evaporator, provided it does not exceed the maximum evaporation speed. More particularly, it was found that for n-decane the percentage of retention falls, other conditions being equal, from 75% with a sample flow-speed of 500 microlitres per minute to 50% at a flow rate of 250 microlitres per minute. Nevertheless, such differences are already negligible for n-dodecane and are in practice nothing for the higher homologues.

It has been found that in practice the retention of the volatile components does not depend on the retaining power of the support material used.

It has been further observed that the best results were obtained with materials whose particles have irregular surfaces, thus functioning as "centres for boiling", and in the presence of liquid samples inside the packing 2. The wetted packing zone 16 (Fig.4) may extend from the inlet end 17 of the evaporator to a distance of about 5 mm from the opposite (outlet) end of the same. The front of the wetted packing zone should be found preferably between L-5mm and L/2 where L is the length in mm of the packing. Of course, as already stated, the procedure can work without a wetted zone or with a reduced wetted zone.

The evaporation of the solvent happens (Fig.4) throughout all the wetted zone 16 forming a vapour path which begins at the end 17, with, if required, the assistance of a stream of inert gas from inlet 15. By regulating the temperature, pressure, and flow-rate of the sample into the evaporator 1 the required extension of the wetted zone 16 and the formation of a "static state" which continues until the end of the reconcentration are obtained. Obviously the values of the above mentioned parameters vary as a function of the solvent used.

The following table shows some preferential supports and the relative evaporation speeds as obtainable using pentane and a tubular evaporator 40 x 1.3mm (inner diameter) at 45 °C. The front of the "wetted" packing zone, containing the liquid sample, was regulated to correspond to the centre of the evaporator.

**TABLE 1**

| Packing material | Evaporation Speed (µl/min) |
|---|---|
| 1. Chromosorb P 80/100 mesh | 430 |
| 2. Chromosorb covered with ov-1701 7% | 200 |
| 3. Chromosorb 3/4 covered, 1/4 not covered | 400 |
| 4. Tenax 35/60 mesh | 380 |
| 5. Tenax + 10% Chromosorb P | 420 |
| 6. Silica Gel 60, 35/70 mesh | 520 |
| 7. Silica Gel octadecyl sililate | 180 |

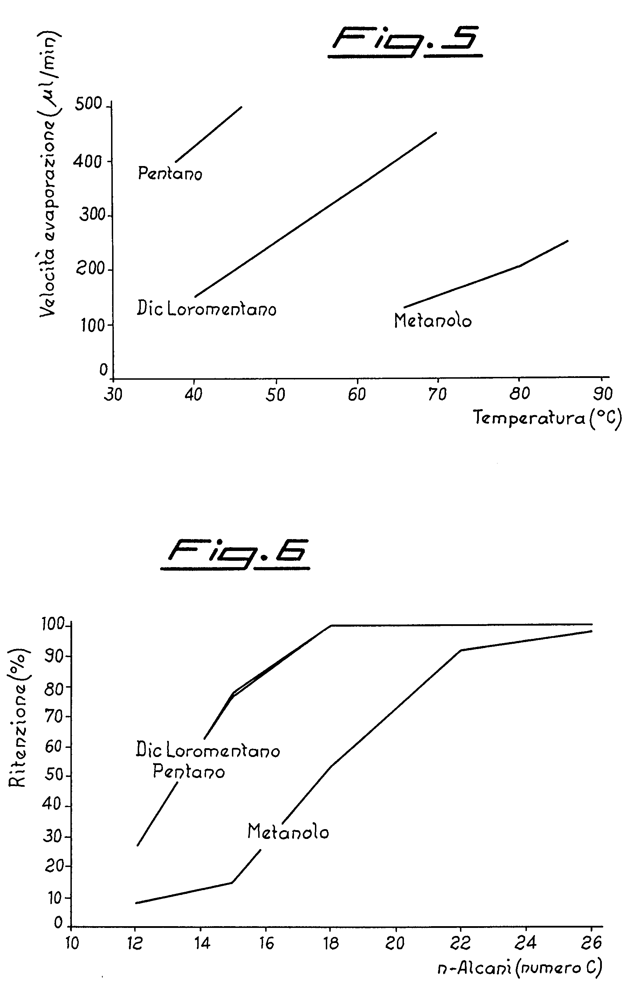

The materials of Table 1 were used to obtain the graph of Fig. 3 related to the retention times of the volatile elements (n-alcanes C10 to C26) as a function of the support material, with the following evaporation speeds of 1 ml of solution in pentane (under the same conditions as reported in Table 1):

| Ref. Fig 3 | Material Tab. 1 | Evaporation Speed (µl/min) |
|---|---|---|
| A | 6 | 500 |
| B | 4 | 400 |
| C | 3 | 430 |
| D | 2 | 200 |
| E | 1 | 300 |

As can be seen from graph in Fig.3, support materials substantially inert to the compounds used, such as silica gel have given better results than supports with a stationary phase.

Graphs 5 and 6 respectively show the dependence of the compound retention times and evaporation speed from the type of solvent used.

The data for graph of fig. 5 were obtained with a tubular evaporator 40 x 1.3 mm (inner diameter) packed with Chromosorb P 80/100 mesh, with a sample flow rate such as to have a wetted zone about 2/3 of the length of the packing. As it can be seen, the evaporation speed depends not only on the boiling point of the solvent but also on the volume of vapour produced per volume unit of liquid and on the viscosity of the vapour. This explains the great difference between the values given by pentane and dichloromethane, which solvents have relatively similar boiling points (36°C and 42°C).

The solvents of Fig.5 were used to determine the retention values reported in Fig.6, with an evaporator packed with Chromosorb P 80/100 mesh. The evaporation temperatures used were 42° C for pentane (evaporation speed 300 µl/min), 48 °C for dichloromethane (evaporation speed 200 µl/min) and 72°C for methanol (evaporation speed 150 µl/min). The wetted zone was positioned about mid packing. The substantially corresponding results for pentane and dichloromethane despite the higher temperature used for the latter and the volume of gas being more than twice that of pentane, is presumably due to a better retention for solvating the compounds present in solution. The values obtained for methanol show an increase in the losses of volatile elements in the case where the sample compounds are little solvated. In conclusion, the device according to the present invention enables simple and efficient reconcentration of liquid samples containing volatile compounds, reducing losses of these compounds to a minimum with obvious operating advantages.

Such a device is particularly indicated for on-line LC-GC or LC-LC-GC analyses.

## Claims

1. A method for the preparation of liquid samples for analysis, characterized in that it comprises the following steps:
placing upstream of an analysis apparatus and linked in a controlled way to it, a container having means for controlling the temperature and internal pressure and containing one or more support materials;
regulating said temperature and pressure control means to values corresponding to those of evaporation of the solvent present in said sample;
feeding the liquid sample to said container, evaporating the solvent and reconcentrating the sample; and
sending the reconcentrated sample to said analysis apparatus.

2. A method according to Claim 1, characterized in that it further comprises the steps of feeding further uptake solvent, the same or different as that previously evaporated, to said container and dissolving the reconcentrated sample in said further solvent.

3. A method according to Claim 2, characterized in that said further uptake solvent includes a reagent for producing derivatives of the compounds present in the container.

4. A method according to Claim 2, characterized in that the reconcentrated sample is sent to said analysis apparatus by means of a further transport solvent, the same or different from the evaporated solvent or said further uptake solvent.

5. A method according to Claim 1, characterized in that the evaporation of the liquid sample solvent is substantially simultaneous with the solvent feeding into said container, maintaining a substantial absence of liquid solvent in the interior of the container.

6. A method according to Claim 1, characterized in that a part of the liquid sample introduced into the container is kept in the liquid state, and the evaporation of the solvent is effected through the zone of support or packing provided with liquid sample.

7. A method according to Claim 6, characterized by keeping the front of said liquid sample at a distance from the inlet end between L-5mm and L/2 where L is the length in mm of the packing.

8. A method according to one of Claims 5 or 6, characterized by feeding inert gas into said container during at least part of said phase of evaporation and reconcentration.

9. A method according to one of Claims 1 to 8, characterized in that a first separation is carried-out in an analysis apparatus upstream of said evaporator element and one or more fractions coming off the apparatus are sent to said evaporator by an on-line link, and in that the reconcentrated sample is on-line sent to said analysis apparatus downstream of said evaporator-container.

10. A device for the preparation of liquid samples for analysis, characterized in that it comprises:
a container provided with one or more support materials forming a packing;
means to control the temperature and the internal pressure of the container;
means to connect said container to at least one analysis apparatus downstream of it.

11. A device according to Claim 10, characterized in that said pressure control means are in the form of an outlet pipe which can be connected with the outer environment and/or with a vacuum source.

12. A device according to Claim 10, characterized in that it further includes means of supplying inert gas.

13. A device according to Claim 10, characterized in that said support material or materials are selected from supports for chromatography, provided with or without a stationary phase, and inert particulate materials, such as glass or the like, and mixtures of these.

14. A device according to Claim 13, characterized in that said material is silica gel.

15. An apparatus for the analysis of liquid samples characterized in that it comprises a device according to one of the Claims 10 to 14 which can be connected on-line with one or more analysis apparatuses downstream of it, together with means to connect in a controlled way said device with said apparatus or apparatuses.

16. An apparatus according to Claim 15, characterized in that includes one or more analysis apparatuses upstream of said evaporator and which can be connected on-line with it.

17. An apparatus according to Claim 15, characterized in that said analysis apparatus or apparatuses downstream of aid device are chosen from among gaschromatographs, liquid chromatographs, mass spectrometers and apparatuses for flow injection analysis.

18. The use of a device according to one of Claims 10 to 14 for the reconcentration of liquid samples.
